# EUROPÄISCHE PATENTSCHRIFT

(11) **EP 0 616 960 B1**
(45) Veröffentlichungstag und Bekanntmachung des Hinweises auf die Patenterteilung: **04.12.1996**
(21) Anmeldenummer: 94103991.9
(22) Anmeldetag: 15.03.1994
(51) Int. Cl.: B65G 47/19, B65G 47/46, B27N 3/14

(54) **Vorrichtung und Verfahren zum Verteilen von Materialien**
Device for and method of distributing materials
Dispositif et procédé pour distribuer des matériaux

(30) Priorität: 24.03.1993 DE 4309613
(43) Veröffentlichungstag der Anmeldung: 28.09.1994
(73) Patentinhaber: BFI ENTSORGUNGSTECHNOLOGIE GmbH, D-40883 Ratingen (DE)
(72) Erfinder: Wintrich, Franz, Dipl.-Ing., D-45309 Essen (DE); Kaiser, Dieter, Dipl.-Ing., D-44357 Dortmund (DE); Wintrich, Hartmut, Dipl.-Ing., D-45130 Essen (DE)

(56) Entgegenhaltungen:
- CH-A- 548 928
- DE-A- 1 506 890
- US-A- 4 060 167

## Beschreibung

Die vorliegende Erfindung betrifft eine Vorrichtung zum gleichmäßigen Austrag, zur Auflockerung und Verteilen von festen Abfällen bzw. Abfallgemischen auf einem Transport- oder Förderband oder sonstigen sich bewegenden flächenartigen Anordnungen, wobei die Vorrichtung walzen-, spiral- oder rollenartig drehbar ausgebildet ist und Öffnungen auf der Rollenoberfläche aufweist, durch die sich das zu verteilende Material hindurch bewegen kann. Die vorliegende Erfindung betrifft ferner ein Verfahren zum Verteilen von festen Abfällen bzw. Abfallgemischen unter Verwendung der erfindungsgemäßen Vorrichtung.

Die Verteilung und Auflockerung fester Materialien ist in zahlreichen technischen Prozessen eine sehr wichtige Maßnahme, um nachfolgend mit den verteilten Materialien weitere Vorgänge durchführen zu können.

So ist beispielsweise in der DE-A-1 506 890 eine Querstangen aufweisende Hohlwalze zum Verteilen von schüttfähigem Gut offenbart.

In der CH-A-548 928 ist eine Dosier- oder Nivellierwalze beschrieben, die querliegende Kammelemente mit Zinken aufweist.

Die Verteilung und Auflockerung stößt jedoch insbesondere dann auf Schwierigkeiten, wenn das zu verteilende Gut nicht fließfähig, sondern sperrig, klebrig und feucht ist, aus chemisch und physikalisch unterschiedlichen Materialien besteht und unterschiedliche Größe besitzt.

Es ist bekannt, unregelmäßig ankommendes und zusammengesetztes Gut durch Walzen und Rollen auszubreiten und zu verteilen, wobei durch die Walzen und Rollen im allgemeinen auf das Gut Druck ausgeübt wird. Als Folge treten beispielsweise Zusammenpackungen, Deformationen, Anklebungen bzw. Anbackungen auf, verbunden mit der Behinderung des kontinuierlichen Ablaufs der Verteilung und der Folgeprozesse.

Typische Materialien, die in der geschilderten Weise schwer handhabbar sind, sind feste Abfälle, insbesondere feste Abfallgemische, die häufig zusätzlich durch beigemengte Flüssigkeiten z. B. aus Lebensmitteln, Haushalt, Getränkepackungen und dergleichen verunreinigt sind.

Die Aufgabe Abfallgemische im Hinblick auf die Aussortierung wertvoller Materialien und Rohstoffe aufzuarbeiten, gewinnt zunehmend an Bedeutung.

Die Aufgabenstellung eine gleichmäßige Verteilung und Auflockerung des Abfallmaterials herbeizuführen, um Folgeprozesse wie z. B. Zerkleinerungs-, Sortier-, Trenn- u. ä. Vorgänge problemlos durchführen zu können, stellt besonders hohe Anforderungen, da Abfälle bekanntlich sehr inhomogen sind. So kann es sich um Plastikfolien unterschiedlicher Größe, um Papier, um Pappe unterschiedlicher Größe, um sonstige Gebinde wie Schachteln, Flachen, Dosen, Tierfutter- und Lebensmittelverpackungen und dergleichen, um Metallteile, um Glas unterschiedlicher Form, um Gummi wie z. B. Reifen, um Vegetabilien, um Gartenabfälle und zahlreiche andere Materialien handeln.

Die Trennung und Sortierung solcher Gemische setzt voraus, daß die einzelnen Materialien möglich gut verteilt oder sogar vereinzelt werden. Bisher ist diese Aufgabenstellung unbefriedigend gelöst oder sogar ungelöst, so daß Verteilung, Sortierung oder Trennung von festen Abfallmaterialien überwiegend in Abfallaufarbeitungsanlagen manuell erfolgt. Dies wiederum ist mit hohen Kosten, hohem Zeitaufwand und relativ begrenztem Durchsatz verbunden.

Der Anmelderin ist es nunmehr gelungen, eine äußerst wirkungsvolle Vorrichtung zur Lösung der geschilderten Aufgabenstellung zu entwickeln zum Verteilen von festen Abfallmaterialien auf Transport- oder Förderbändern, die als walzenförmiger Körper ausgebildet ist, der mittels eines Antriebs rotierbar ist und aus zwei Scheiben besteht, die im Bereich ihres Umfangs durch parallel zur Rotationsachse der Scheiben im Abstand angeordnete stabförmige Bauteile verbunden sind, wobei die stabförmigen Bauteile so angeordnet sind, daß sie die äußere Oberfläche der Walze bilden und der Abstand mindestens so groß gewählt ist,
daß das zu verteilende Material zischen den stabförmigen Bauteilen hindurchtreten kann,
wobei die Walze in der Höhe verstellbar ist und die Umdrehungsgeschwindigkeit der Walze in Abhängigkeit von der Belastung der Walze, der Größe und Art des zu verteilenden und aufzulockernden Gutes, der Anzahl der zwischen den Rollen vorliegenden Öffnungen und der Transportgeschwindigkeit von zuführendem und wegführendem Band einstellbar ist,
die Drehgeschwindigkeit des walzenförmigen Körpers 3 bis 100 U/min. beträgt, die Breite des walzenförmigen Körpers 0,4 bis 4 m, bevorzugt 0,8 bis 2,5 m beträgt, der Durchmesser des walzenförmigen Körpers 0,4 bis 2,5 m, bevorzugt 0,8 bis 2 m beträgt, der walzenförmige Körper 3 bis 10 Rollen aufweist,
dem walzenförmigen Körper ein Zuführungstransportband mit einer Transportgeschwindigkeit von 20 mm/sec. bis 60 mm/sec. und ein Wegführungstransportband mit einer Transportgeschwindigkeit von 0,1 bis 2 m/sec. zugeordnet ist und die stabförmigen Bauteile drehbare Rollen sind.

Ferner stellt die Anmelderin die Verwendung dieser Vorrichtung zur Verteilung von Abfallmaterialien auf Transport- oder Förderbändern zur Verfügung sowie ein Verfahren zum Verteilen fester Abfallmaterialien auf Transport- oder Förderbändern, wobei auch ein gleichmäßigerer Austrag und eine Auflockerung des Materials erzielt wird.

Die erfindungsgemäße Vorrichtung ist gegenüber einem Zuführungstransportband so angeordnet, daß auf diesem Band befindliches Abfallmaterial zwischen die stabförmigen Bauteile fallen kann, sich durch die sich drehende Vorrichtung hindurch bewegen und wieder aus der Vorrichtung auf ein wegführendes Transportband fallen kann. Das zuführende Transportband kann auch als Speicherband, z. B. als Bunkerband ausgebildet sein.

Die Vorrichtung ist walzenartig ausgebildet. An der Peripherie der Walze befinden sich stabartige Bauteile über die Breite der Walze, die so angeordnet sind, daß sie die äußere Oberfläche oder Walze bilden und der Abstand mindestens so groß gewählt ist, daß das zu verteilende Material zwischen den stabförmigen Bauteilen hindurchtreten kann.

Die Bauteile sind rollenartig und selbst drehbar. Die Walze wird mit einem Antrieb in Drehbewegung versetzt. Auch die Rollen können eigene Antriebe besitzen, sie können jedoch auch über Riemen durch den zentralen Walzenantrieb drehbar sein. Die Drehgeschwindigkeit der Walze ist verstellbar und liegt bei 3 bis 100 U/min. Die Einstellung der Drehgeschwindigkeit erfolgt in Abhängigkeit von der Belastung der Walze, der Größe und Art des zu verteilenden und aufzulockernden Gutes, der Anzahl der Segmente und der Transportgeschwindigkeit von zuführendem und wegführenden Band. Die Walzenbreite beträgt 0,4 - 4 m bevorzugt 0,8 - 2,5 m, während der Walzendurchmesser 0,4 - 2,5 m, bevorzugt 0,8 - 2 m beträgt.

Die Anzahl der Rollen beträgt 3 - 10.

Die Drehgeschwindigkeit der Rollen liegt im allgemeinen bei 50 - 150 U/min.

Wesentlich ist, daß die Anzahl der Rollen sowie die Drehbewegungen dem zu verteilenden Gut angepaßt sind, da das Gut zwischen den Rollen hindurchtreten muß. Teilweise kann es jedoch auch über die Walze hinweg oder unter dieser hindurch befördert werden. Hierzu ist die Walze in der Höhe einstellbar und nimmt hierdurch veränderbare Positionen zu den Förderbändern ein. Die Walze kann auch ggf. in Längsrichtung verstellbar sein.

Die Transportgeschwindigkeit der Förderbänder ist veränderlich. Im allgemeinen sind die Transportgeschwindigkeiten von zuführenden und wegführenden Transportband verschieden. So liegt die Zuführungsgeschwindigkeit im allgemeinen bei 20 mm/sec bis 60 mm/sec, die des wegführenden Bandes bei 0,1 - 2 m/sec.

Für Störfälle und gewünschte Förder-, Auflockerungs- und Verteilungsmaßnahmen kann die Walze in beiden Richtungen vor und rückwärts bewegt werden. Auch die Drehung der Rollen kann so ausgebildet sein. Auf den Rollen befinden sich Anordnungen, welche die Verteilung und/oder den Schneidevorgang zusätzlich unterstützen. Diese können Messer, Scheiben, die auch als Messer ausgebildet sein können, oder Zahnräder sein, die vorzugsweise auf der Rolle frei drehbar sind.

Die Rollen selbst sind erfindungsgemäß ebenfalls verstellbar, so daß Zwischenräume unterschiedlicher Breite bzw. Größe nebeneinander vorliegen können.

Seitlich an der Walze befinden sich vorzugsweise Führungsbleche um das Herausfallen des zu verteilenden Gutes zu verhindern.
Die Förderbänder sind vorzugsweise mit Mitnehmervorrichtungen ausgestattet, wie z. B. Noppen, Stollen, Rillen und dergleichen.

Die Rollen können unterschiedliche Durchmesser und Drehgeschwindigkeiten besitzen, wobei im allgemeinen die kleineren Rollen größere Drehgeschwindigkeiten aufweisen.

Erfindungsgemäß wesentlich ist nicht nur der Einsatz einer einzelnen Walze, sondern die Anordnung mehrerer Walzen in einem Förder- bzw. Verteilungssystem. Hierbei können die einzelnen Walzen unterschiedlich groß sein und mit unterschiedlicher Drehgeschwindigkeit rotieren, in unterschiedlichen Positionen zu einander angeordnet sein, wie z. B. nebeneinander, hintereinander, übereinander sowohl in unterschiedicher Längsrichtung und Höhe. Erfindungsgemäß kann der Einsatz einer oder mehrerer Walzen auch zum Auflockern des Materials, insbesondere Abfallmaterials dienen. Dabei wird das aufzulockernde Gut über die Walze oder die Walzen geschoben und durch diese in Vertikalbewegung versetzt. Dadurch kann ebenfalls ein leichterer, gleichmäßigerer Austrag erfolgen. Bevorzugt werden erfindungsgemäß 1 - 5 Walzen eingesetzt.

Vorzugsweise sind die Walzen in Halterungen eingehängt und dadurch leicht auswechselbar.

Die vorliegende Erfindung betrifft die Verwendung der erfindungsgemäßen Vorrichtung zum Verteilen von festen Abfällen, insbesondere Abfallgemischen und ein Verfahren zum Verteilen fester Abfallmaterialien auf Transport- oder Förderbändern, wobei auch eine Auflockerung des Materials erreicht wird.

Die vorliegende Erfindung soll nunmehr mit Hilfe der Figuren näher erläutert werden.

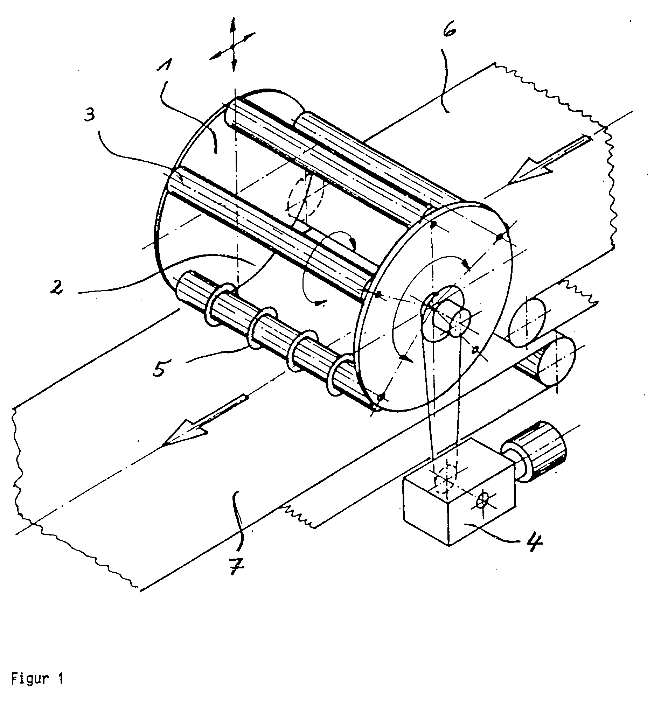

In **Figur 1 i**st eine einzelne Walze dargestellt. (1) ist die gesamte Walze. (2) ist einer der Zwischenräume zwischen den stabartigen Bauteilen. (3) stellt das stabartige, bevorzugt rollenartig ausgebildete Bauteil dar. (4) ist der Antrieb der Walze. (5) sind Anordnungen auf den Rollen zur zusätzlichen Verbesserung der Verteilung. (6) ist ein Zuführungsband. (7) ist ein wegführendes Band.

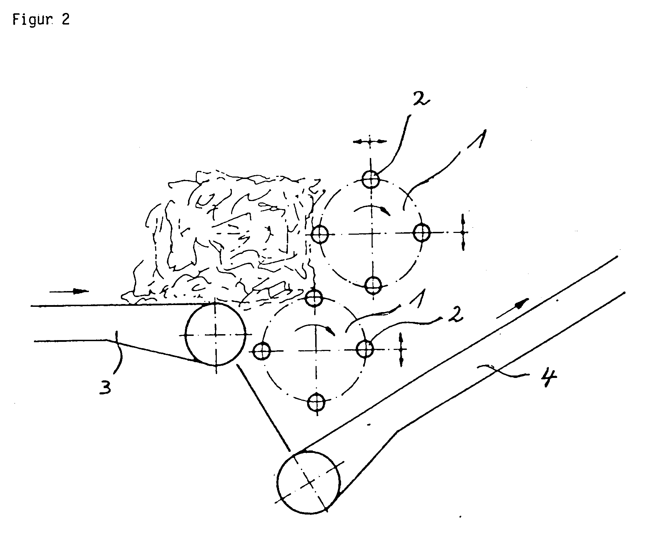

In **Figur 2** ist eine aus zwei Walzen (1) bestehende Vorrichtung dargestellt, mit den Rollen (2). (3) ist das Zuführungsband und (4) das wegführende Band.

## Patentansprüche

1. Vorrichtung zum Verteilen von festen Abfallmaterialien auf Transport- oder Förderbändern, die als walzenförmiger Körper ausgebildet ist, der mittels eines Antriebs rotierbar ist und aus zwei Scheiben besteht, die im Bereich ihres Umfangs durch parallel zur Rotationsachse der Scheiben im Abstand angeordnete stabförmige Bauteile verbunden sind, wobei die stabförmigen Bauteile so angeordnet sind, daß sie die äußere Oberfläche der Walze bilden und der Abstand mindestens so groß gewählt ist, daß das zu verteilende Material zischen den stabförmigen Bauteilen hindurchtreten kann, wobei
die Walze in der Höhe verstellbar ist und die Umdrehungsgeschwindigkeit der Walze in Abhängigkeit von der Belastung der Walze, der Größe und Art des zu verteilenden und aufzulockernden Gutes, der Anzahl der zwischen den Rollen vorliegenden Öffnungen und der Transportgeschwindigkeit von zuführendem und wegführendem Band einstellbar ist, die Drehgeschwindigkeit des walzenförmigen Körpers 3 bis 100 U/min. beträgt, die Breite des walzenförmigen Körpers 0,4 bis 4 m, bevorzugt 0,8 bis 2,5 m beträgt, der Durchmesser des walzenförmigen Körpers 0,4 bis 2,5 m, bevorzugt 0,8 bis 2 m beträgt,
der walzenförmige Körper 3 bis 10 Rollen aufweist,
dem walzenförmigen Körper ein Zuführungstransportband mit einer Transportgeschwindigkeit von 20 mm/sec. bis 60 mm/sec. und ein Wegführungstransportband mit einer Transportgeschwindigkeit von 0,1 bis 2 m/sec. zugeordnet ist und die stabförmigen Bauteile drehbare Rollen sind.

2. Vorrichtung nach Anspruch 1, dadurch gekennzeichnet, daß sich auf den stabförmigen Bauteilen den Verteilungsvorgang unterstützende Anordnungen befinden.

3. Vorrichtung nach einem der Ansprüche 1 und 2, dadurch gekennzeichnet, daß die stabförmigen Bauteile drehbare Rollen mit Antrieben sind.

4. Vorrichtung nach Anspruch 3, dadurch gekennzeichnet, daß die Drehgeschwindigkeit der drehbaren Rollen 50 bis 150 U/min beträgt.

5. Vorrichtung nach einem der Ansprüche 1 - 4, dadurch gekennzeichnet, daß der walzenförmige Körper in beiden Richtungen drehbar ist.

6. Vorrichtung nach einem der Ansprüche 1 - 5, dadurch gekennzeichnet, daß die Anordnungen auf den stabartigen Bauteilen scheibenartig sind.

7. Vorrichtung nach Anspruch 6, daß die Scheiben freilaufend drehbar sind.

8. Vorrichtung nach einem der Ansprüche 1 - 7, dadurch gekennzeichnet, daß der walzenförmige Körper in der Höhe verstellbar ist.

9. Vorrichtung nach einem der Ansprüche 1 - 8, dadurch gekennzeichnet, daß diese mehrere Walzen aufweist.

10. Vorrichtung nach Anspruch 9, dadurch gekennzeichnet, daß die Walzen unterschiedliche Positionen in Höhe und Längsrichtungen einnehmen können.

11. Vorrichtung nach den Ansprüchen 9 und 10, dadurch gekennzeichnet, daß die Walzen gegeneinander verstellbar sind.

12. Verwendung wenigstens einer der Vorrichtungen nach den Ansprüchen 1 - 11, zum gleichmäßigen Antrag und zum Verteilen von Abfallmaterialien auf Transport- oder Förderbändern.

13. Verfahren zum Verteilen fester Materialien auf Transport- oder Förderbändern unter Verwendung wenigstens einer der Vorrichtungen nach den Ansprüchen 1 bis 11.

## Claims

1. Device for distributing solid waste materials on conveyors, which is designed as a cylindrical apparatus, and can be rotated by a driving engine and consists of two disks, which are connected at the circumference by rod-like construction elements, which are arranged parallell to the rotation axis in a distance to each other, whereby the rod-like construction elements are arranged furthermore in such a way that they form the outer surface of the cylindrical apparatus and the distances are chosen at least to the extent that the material to be distsributed can pass through between the rod-like construction elements, whereby the cylindrical device can be adjusted with regard to its altitude and the speed of rotation of the cylindrical device is adjustable depending on the load of the cylindrical device, on size and kind of the material to be distributed and dispersed, on the number of slots between the rod-like construction elements and on the transport rate of the feeding conveyer and the removing conveyer, the speed of rotating of the cylindrical device amounts to 3 to 100 rotations per minute, the width of the cylindrical device is 0,4 to 4 m, preferably 0,8 to 2,5 m, the diameter of the cylindrical device is 0,4 to 2,5 m, preferably 0,8 to 2 m, the cylindrical device exhibits 3 to 10 rod-like construction elements, a feeding conveyer with a transportation rate of 20 mm/sec to 60 mm/sec and a removing conveyer with a transportation rate of 0,1 to 2 m/sec is related to the cylindrical device and the rod-like construction elements are rotatable rolls.

2. Device according to claim 1, charactenzed in that elements exist on the rod-like construction elements, which support the distributing operation.

3. Device according to claims 1 and 2,characterized in that the rod-like construction elements are rotatable rolls with driving engines.

4. Device according to claim 3, characterized in that the speed of rotation of the rotatable rolls is 50 to 150 rotations per minute.

5. Device according to claims 1 to 4, characterized in that the cylindrical device is rotatable in both directions.

6. Device according to claims 1 to 5, characterized in that the elements on the rod-like construction elements are disc-like.

7. Device according to claim 6, characterized in that the discs are freely rotatable.

8. Device according to claims 1 to 7,characterized in that the cylindrical device ist adjustable with regard to its altitude.

9. Device according to claims 1 to 8, characterized in that several cylindrical devices are present.

10. Device according to claim 9, characterized in that the cylindrical device can be positioned at variable altitude and horizontal direction.

11. Device according to claims 9 and 10, characterized in that the cylindrical devices can be variably positioned to each other.

12. Use of at least one of the devices of claims 1 to 11, for a steady removal and distribution of waste materials on conveyers.

13. Process for the distribution of solid materials on conveyers by using at least one of the devices according to claims 1 to 11.

## Revendications

1. Dispositif pour distribuer des déchets solides sur des convoyeurs à courroie ou des bandes trransporteuses, lequels est cylindrique et rotatif par une motorisation et est composé de deux disques, qui sont assemblés dans la sphère de ses circonférences par des dispositifs en forme de barre disposés en distance et parallèles à l'axe de révolution, à l'occasion de quoi les dispositifs en forme de barre sont arrangés ainsi qu'ils formes la surface extérieure et la distance est choisie au moins ainsi grande que la matière à distribuer est capable de traverser l'espace entre les dispositifs en forme de barre à l'occasion de quoi le dispositif cylindrique est réglable concernant la hauteur et la vitesse rotatoire du dispositif cylindrique est adjustable dépendent de la capacité du dispositif cylindrique, dépendent de l'étendue et formule de la matière à distribuer et ramollir et dépendant du nombre des fentes entre les dispositifs au forme de barre et dépendent de la vitesse de transport de la bande amenant et de la bande emmenant, la vitesse rotatoire du dispositif cylindrique est 3 à 100 rotations à minute, la largeur du dispositif cylindrique est 0,4 à 4 m, préférable 0,8 à 2,5 m, le diamètre du dispositif cylindrique est 0,4 à 2,5 m, préférable 0,8 à 2 m, le dispositif cylindrique présente 3 à 10 dispositifs en forme de barre, une bande transporteuse amenante avec une vitesse à transport de 20 mm/sec à 60 mm/sec et une bande transporteuse emmenante avec une vitesse à transport de 0,1 a 2m/sec sont coordinées au dispositif cylindrique et les dispositifs en forme de barre sont des bobines pivotantes.

2. Dispositif selon la revendication 1, charactérisée en ce que des dispositions assistantes la distribution se trouvent sur les dispositives en form de barre.

3. Dispositif selon les revendications 1 et 2, charactérisée en ce que les dispositifs en forme de barre sont bobines pivotantes avec de motorisations.

4. Dispositif selon la revendication 3, charactérisée en ce que la vitesse rotatoire des bobines pivotantes est 50 à 150 rotations à minute.

5. Dispositif selon les revendications 1 à 4, characterisée en ce que le dispositif cylindrique est pivotant dans les deux directions.

6. Dispositif selon les revendications 1 à 5, charactérisée en ce que les dispositions assistantes la distribution sont du type de disque.

7. Dispositif selon la revendication 6, charactérisée en ce que les disques sont pivotants libre.

8. Dispositif selon les revendications 1 à 7, charactérisée en ce que le dispositif cylindrique est réglable concernant la hauteur.

9. Dispositif selon les revendications, charactérisée en ce que lequel présents plusieurs dispositifs cylindriques.

10. Dispositif selon la revendication 9, charactérisée en ce que les dispositifs cylindriques peuvent occuper des positions differentes dans les senses de la longeur et de la hauteur.

11. Dispositif selon les revendication 9 et 10, charactérisée en ce que les dispositifs cylindriques sont justable l'un envers l'autre.

12. Application des dispositifs selon les revendications 1 à 11, pour charger des déchets homogènes et pour la distribution des déchets sur des convoyeurs a courroie ou des bandes transporteuses.

13. Procédé pour la distribution de la matiére sur des convoyeurs à courroie ou des bandes transporteuse, applicant le dispositif selon les revendications 1 à 11.
